(19) Europäisches Patentamt
European Patent Office
Office européen des brevets

(11) Publication number: **0 506 088 A2**

# (12) EUROPEAN PATENT APPLICATION

(21) Application number: **92105312.0**

(22) Date of filing: **27.03.92**

(51) Int. Cl.[5]: **C08F 218/00**, C09D 131/00, C09D 11/10, //(C08F218/00, 220:04)

(30) Priority: **28.03.91 US 676517**

(43) Date of publication of application: **30.09.92 Bulletin 92/40**

(84) Designated Contracting States: **AT BE CH DE DK ES FR GB GR IT LI LU MC NL PT SE**

(71) Applicant: **UNION CARBIDE CHEMICALS & PLASTICS TECHNOLOGY CORPORATION**
**39 Old Ridgebury Road**
**Danbury, Connecticut 06817-0001(US)**

(72) Inventor: **Hilker, Brian Lee**
**2 Windsong Acres**
**West Virginia, Winfield 25513(US)**
Inventor: **Smith, Oliver Wendell**
**850 Walters Road**
**West Virginia, Charleston 25314(US)**

(74) Representative: **von Hellfeld, Axel, Dr. Dipl.-Phys.**
**Wuesthoff & Wuesthoff Patent- und Rechtsanwälte Schweigerstrasse 2**
**W-8000 München 90(DE)**

(54) **Water soluble copolymers prepared from vinyl functional monomers.**

(57) Compositions are disclosed which are useful in coating and ink applications. Such compositions comprise a copolymer of at least one vinyl ester monomer and at least one vinyl functional acid-containing monomer in which the vinyl group is separated by at least two atoms from the acid group, the copolymer more preferably having a number average molecular weight of less than 10,000 and being substantially water soluble in the neutralized state. A particularly useful vinyl functional, carboxylic acid-containing monomer is mono vinyl adipate.

EP 0 506 088 A2

## Background of the Invention

This invention relates to copolymers derived at least in part from vinyl functional monomers. More particularly the invention relates to copolymers derived at least in part from vinyl ester monomers and certain vinyl functional acid-containing monomers, which copolymers have applicability for example in coatings and/or in inks.

Polymers typically used in water Soluble coatings and inks are acid-containing materials which are inherently insoluble in water but are rendered soluble upon partial or full neutralization with a base, such as ammonium hydroxide. At present, acrylic copolymers are often used in these applications. Recently developed, branched chain vinyl ester monomers hold promise for allowing polymers including lower cost vinyl ester monomers, such as vinyl acetate, to be used.

An important cost consideration in preparing and using these vinyl ester-containing copolymers is the amount of acid monomer needed to make the copolymer water soluble. Because the acid monomers are often relatively expensive, it would be advantageous to use acid monomers which are effective in reduced amounts to produce water soluble copolymers.

Republic of South Africa Patent Application 684376 discloses terpolymers that is, copolymers derived from three different monomers, as binders in hair fixing formulations which contain moieties derived from vinyl acetate, crotonic acid, and a vinyl ester of an alpha-branched saturated aliphatic carboxylic acid having a minimum of five carbon atoms in the carboxylic acid moiety. These terpolymers are disclosed as having sufficient alcohol solubility water solubility and film characteristics to be useful in hair fixing compositions. No other acid monomers are disclosed, nor are any of the terpolymers disclosed as being useful in water-based coatings or in inks.

Bailey et al U.S. Patent 4,440,848 discloses a timing layer polymer for a photographic assemblage. The polymer includes about 1 to about 30 weight percent of a polymerized monovinyl ester of a polybasic acid; a polymerized alkyl vinyl ester and a polymerized aryl vinyl ester. The number average molecular weight of such polymers range from 10,000 to 2OO,000, preferably 40,000 to 100,000. None of these polymers are disclosed as being useful in water-based coatings or in inks.

## Summary of the Invention

New polymeric compositions particularly such compositions which are useful in coating applications and in inks, have been discovered. These compositions comprise one or more copolymers including units, e.g., repeating units, derived from at least one vinyl ester monomer and at least one vinyl functional acid-containing monomer in which the vinyl group is separated by at least two atoms from the acid group. Such copolymer or copolymers preferably have a number average molecular weight of less than about 15,000, more preferably less than 10,000, and are substantially water soluble in the neutralized state.

One particularly useful class of compositions comprises terpolymers comprising units derived from vinyl acetate, vinyl pivalate and monovinyl adipate which are substantially water soluble in the neutralized state.

In addition, compositions comprising a copolymer comprising units derived from at least one first vinyl ester monomer, at least one second non-vinyl ester monomer having a functional carbon-carbon double bond, and at least one third vinyl functional acid-containing monomer are within the scope of the present invention. The third monomer includes a vinyl group which is separated by at least two atoms from the acid group. The copolymer is substantially water soluble in the neutralized state.

A still further class of compositions included within the scope of the present invention comprises a copolymer comprising units derived from at least one first vinyl ester monomer, at least one second monomer having a functional carbon-carbon double bond and at least one third vinyl functional acid-containing monomer in which a vinyl group is separated by at least two atoms from an acid group. The copolymer preferably has a number average molecular weight of less than about 15,000, more preferably less than 10,000, and is substantially water soluble in the neutralized state.

In certain instances, only a portion, for example, a major portion, of the acid groups in the copolymer may be neutralized before the copolymer is rendered water soluble.

Such copolymers are useful and effective in one or more of various coating applications, for example, as film-forming binder components in paint compositions, and/or in one or more inks. In addition, because of the choice of the vinyl functional acid-containing monomer or monomers, as described herein, such copolymers can be produced incorporating relatively small amounts of such acid monomer or monomers, which are often relatively expensive. Thus, the present copolymers are cost effective to use and can be produced using conventional polymerization processing.

Detailed Description of the Invention

The present compositions involve copolymers including units derived from at least one vinyl ester monomer. As used & herein, the term "copolymer" refers to a polymer derived from two or more different monomers. The term "at least one" with reference to any particular material or class of materials means one or more than one (a mixture) of such materials or members of such class of materials. The at least one vinyl ester monomer is selected from compounds having the following formula:

$$R_1 - [\ \overset{\displaystyle O}{\overset{\|}{C}} - O - CH_2 = CH_2\ ]_n$$

and mixtures thereof, wherein R1 is selected from hydrocarbyl radicals and substituted hydrocarbyl radicals, preferably containing 1 to about 20 carbon atoms, and n is an integer in the range of 1 to about 8.

Any suitable hydrocarbyl and substituted hydrocarbyl radicals, including aliphatic radicals, cycloaliphatic radicals, aromatic radicals, heterocyclic radicals and their substituted counterpart radicals, may be employed as R1. Useful hydrocarbyl radicals from which R1 is selected include straight chain aliphatic radicals, branched chain aliphatic radicals, straight chain aromatic aliphatic radicals, branched chain aromatic aliphatic radicals, straight chain aliphatic aromatic radicals, branched chain aliphatic aromatic radicals and aromatic radicals. Particularly useful hydrocarbyl radicals from which R1 is selected include saturated aliphatic radicals, e.g., alkyl radicals, and aromatic saturated aliphatic radicals, e.g., aralkyl radicals. Preferably, n is equal to 1.

For example, R1 may be selected from alkyl groups, such as methyl, ethyl, propyl, butyl, hexyl, octyl, decyl, dodecyl and the like; substituted alkyl groups, such as the above noted alkyl groups substituted with one or more substituent groups including elements such as oxygen, nitrogen, carbon, hydrogen, halogen, sulfur, phosphorus and the like and mixtures or combinations thereof; alkenyl groups, such as ethenyl, butenyl, octenyl, dodecenyl and the like; substituted alkenyl groups, such as the above-noted alkenyl groups substituted with one or more of the above-noted substituent groups and the like and mixtures or combinations thereof; aryl groups, such as phenyl, naphthyl and the like; substituted aryl groups, such as the above-noted aryl groups substituted with one or more of the above-noted substituent groups and the like and mixtures or combinations thereof; aralkyl groups, such as phenyl methyl, phenyl ethyl, phenyl butyl, phenyl octyl, phenyl dodecyl and the like; substituted aralkyl groups, such as the above-noted aralkyl groups substituted with one or more of the above-noted substituent groups and the like and mixtures or combinations thereof; alkaryl groups such as methyl phenyl, ethyl phenyl, butyl phenyl, octyl phenyl, dodecyl phenyl and the like; substituted alkaryl groups, such as the above-noted alkaryl groups substituted with one or more of the above-noted substituent groups and like and mixtures or combinations thereof; aralkenyl groups, such as phenyl ethenyl, phenyl butenyl, phenyl octenyl, phenyl dodecenyl and the like; substituted aralkenyl groups, such as the above-noted aralkenyl groups substituted with one or more of the above-noted substituent groups and the like and mixtures or combinations thereof; alkenaryl groups, such as ethenyl phenyl, butenyl phenyl, octenyl phenyl, dodecenyl phenyl and the like; and substituted alkenaryl groups, such as the above noted alkenaryl groups substituted with one or more of the above-noted substituent groups and the like and mixtures or combinations thereof.

Suitable vinyl ester monomers include monovinyl esters illustrative of which are vinyl acetate, vinyl 2-ethylhexanoate, vinyl propionate, vinyl butyrates, vinyl pivalate vinyl neo-pentanoate, vinyl hexanoates, vinyl benzoate, vinyl isovalerate, vinyl crotonate, vinyl octylates, vinyl nonylates, vinyl neo-nonanoate, vinyl neo-decanoate, vinyl ethyl oxalate, vinyl nicotinate, vinyl laurate, vinyl ketostearate, vinyl stearate, vinyl myristate vinyl palmitate, vinyl arachidinate, vinyl behenate, vinyl oleate, vinyl 9-hydroxystearate, vinyl 9,10-dihydroxystearate, vinyl linoleate, vinyl linolenate, vinyl cinnamate, vinyl napthoates, vinyl cyclopentanoate, vinyl versatates which are commercial products and known to contain mixtures of vinyl esters, vinyl salicylate, vinyl abietate, vinyl courmarilate, 2-vinyl bicyclo [3.3.0]octane-2-carboxylate, 3-vinyl coumarincarboxylate and the like; divinyl esters illustrative of which are divinyl adipate, divinyl oxalate, divinyl succinate, divinyl fumarate, divinyl maleate, divinyl glutarate, divinyl adipate, divinyl sebacate, divinyl phthalate, divinyl isophthalate, divinyl terephthalate, divinyl pinate, divinyl diglycolate, divinyl brassylate, divinyl glutaconate, divinyl glycarates such as divinyl galactarate and divinyl mannarate, divinyl sebacate, diisopropenyl adipate, 1,8-divinyl 4-bromo-naphthalate, 1,8-divinyl, 4-chloro-naphthalate, 1,2-divinyl cyclohexanedicarboxylate, divinyl 3,6-dichlorophthalate, 1,3-divinyl adamantanedicarboxylate, and the like; trivinyl esters illustrative of which are trivinyl mellitate, trivinyl citrate, 1,1,5-trivinyl pentanoate, trivinyl hemimellitate, trivinyl mesate,

1,2,4-trivinyl benzenetricarboxylate, and the like; higher vinyl esters illustrative of which are tetravinyl prehnitate, tetravinyl mellophanate, tetravinyl pyromellitate, 1,3,4,5-tetravinyl-2-carboxylic acid benzoate, 3,3',4,4'-tetravinyl benzophenonetetracarboxylate, 2,3,5,6-tetravinyl bicyclo[2.2.2]oct-7-enetetracarboxylate, 1,2,3,4-tetravinyl cyclobutanetetracarboxylate, 1,2,3,4,5-pentavinyl benzoate, 1,2,3,4,5,6-hexavinyl benzoate, and the like. Vinyl acetate is an especially useful vinyl ester monomer.

In a particularly useful embodiment, the copolymer is derived from at least one first vinyl ester monomer, as described above, in which $R^1$ is a straight chain alkyl group, and at least one second vinyl ester monomer, as described above, in which RI is a branched chain alkyl group, more preferably including a tertiary carbon atom, or an aralkyl radical. The at least one second vinyl ester monomer is preferably incorporated into the copolymer in an amount effective to inhibit or reduce the hydrolysis of the copolymer, relative to a similar copolymer with none of the second vinyl ester monomer incorporated therein.

Examples of suitable first and second vinyl ester monomers are given above. The amount of second vinyl ester monomer incorporated into the copolymer is preferably in the range of about 1% to about 50%, more preferably about 2% to about 50%, of the total number of moles of first and second vinyl ester monomers incorporated into the copolymer.

The vinyl functional acid-containing monomers incorporated into the present copolymers are chosen so that a vinyl group is separated by at least two atoms, for example two carbon atoms, from an acid group. Such acid monomers are preferably selected from compounds having the following formula

$$[\ CH_2 = CH\text{-}]n\ R^2\ [\text{-}A\ ]m$$

and mixtures thereof, wherein $R^2$ is selected from organic radicals, for example, from hydrocarbyl, oxyhydrocarbyl substituted hydrocarbyl and substituted oxyhydrocarbyl radicals, preferably containing 2 to about 20 atoms, A is an acid group selected from a carboxylic acid group, a sulfonic acid group and a phosphoric acid group; and each of m and n is an integer independently selected from integers in the range of 1 to about 8. A single acid monomer may include two or more different types of acid groups. In a particularly useful embodiment, both m and n are 1 and $R^2$ is a divalent organic radical. Preferably, A is a carboxylic acid-group.

Examples of $R^2$ include alkylene radicals, substituted alkylene radicals, oxy-alkylene radicals, substituted oxyalkylene radicals and the like. Examples of useful alkylene radicals include ethylene, propylene, butylene, hexylene, octylene, decylene, dodecylene and the like. Examples of useful oxyalkylene radicals include oxyethylene, oxypropylene, oxybutylene, oxyhexylene, oxyoctylene, oxydecylene, oxydodecylene and the like. Examples of substituted alkylene and substituted oxyalkylene radicals include the above-noted alkylene radicals and oxyalkylene radicals, respectively, substituted with one or more substituent groups including elements such as oxygen, nitrogen, carbon, hydrogen, halogen, sulfur phosphorus and the like and mixtures or combinations thereof.

A particularly useful group of vinyl functional acid-containing monomers are the mono vinyl esters of dibasic carboxylic acids. Examples of such compounds include mono vinyl adipate, mono vinyl oxalate, mono vinyl malovate, mono vinyl succinate, mono vinyl glutarate, mono vinyl phthalate, mono vinyl isophthalate, mono vinyl terephthalate and the like.

Although it is preferred that at least two carbon atoms separate a vinyl group from an acid group in the present acid-containing monomers, these two groups can be separated by any two atoms, provided that such two atoms are in the chain which includes both the vinyl group and the acid group which are to be separated.

The present copolymers preferably have a number average molecular weight of less than about 15,000, more preferably less than 10,000. Such copolymers more preferably have number average molecular weights of at least about 1500, and still more preferably have number average molecular weights in the range of about 2000 to about 7000. Such number average molecular weights are based on conventional gel permeation chromatography (GPC) (or size exclusion chromatography) techniques relative to polystyrene standards.

In one embodiment, less than about 15% of the total number of moles of monomers included in the present copolymers are vinyl functional acid-containing monomer or monomers. More preferablyl less than 10% of the total number of moles of monomers included in the copolymers are derived from the vinyl functional acid-containing monomer. This reduced amount of acid-containing monomer is an important feature of the present invention in that it has been found that such reduced acid-containing copolymers are effectively solubilized upon neutralization relative to the use of other acid-containing monomers, in particular monomers in which the vinyl group and acid group are separated by less than two atoms. Since the acid-containing monomers are relatively expensive, the use of reduced amounts of such acid monomers provide

substantial cost benefits to the present copolymers.

In a particularly useful embodiment, the present copolymers are derived from a combination of vinyl acetate, vinyl pivalate and monovinyl adipate.

Of course, it is understood that the monomers are not present as such in the copolymers. Units, e.g., repeating units, derived from each of the monomers are included in the copolymers. Howeverl for convenience and simplicityl in certain instances herein the monomers are referred to as being present in the copolymers. The percentages of any individual monomer in the copolymers referred to herein mean the weight percent of such monomer based on the total monomers used to produce the copolymers.

In another embodiment of the present invention, compositions comprising at least one copolymer of a non-vinyl ester monomer are provided. These copolymers comprise units derived from at least one first vinyl ester monomer, at least one second non-vinyl ester monomer having a functional carbon double bond, and at least one third vinyl functional acid-containing monomer in which the vinyl group is separated by at least two atoms from the acid group. These copolymers are substantially water soluble in the neutralized state.

The first vinyl ester monomers and the third vinyl functional acid-containing monomers of the second non-vinyl ester monomer containing copolymers are as described previously.

The second non-vinyl ester monomers useful in the present invention have a functional carbon-carbon double bond. That is, a double bond which is capable of reacting with the vinyl group of the first vinyl ester monomer and the vinyl group of the third vinyl functional acid-containing monomers. Of course, in this embodiment, the second non-vinyl ester monomer does not include a vinyl ester group.

Examples of useful second non-vinyl ester monomers include ethylene, vinyl chloride, acrylic acid, methacrylic acid, styrenes and the like. As used herein, the term "styrenes" refers to compounds which include at least one functional carbon-carbon double bond attached directly to an aromatic ring. In particular styrene itself is an example of the styrenes referred herein. Compounds selected from styrenes are of particular usefulness in the present copolymers.

The second non-vinyl ester monomers may include at least one non-vinyl ester group. Examples of such compounds include non-vinyl esters of carboxylic acids which include a functional carbon-carbon double bond. The carboxylic acid from which such monomers are derived preferably containing 2 to about 20 carbon atoms. Although such acids may be polybasic and include more than one functional carbon double bond, preferably such acids are monobasic and include only one functional carbon-carbon double bond. Precursor acids such as acrylic acid, methacrylic acid and the like and mixtures thereof are particularly useful in the present invention. The ester group of the second non-vinyl ester monomers preferably contain 1 to about 10 carbon atoms and more preferably include no carbon-carbon unsaturation. Alkyl esters are particularly useful. Specific examples of the second non-vinyl ester monomers useful in the present invention include butyl acrylate, 2-ethylhexyl acrylate and methyl methacrylate. In one useful embodiment, the second nonvinyl ester monomer is selected from acrylic acid, alkyl esters of acrylic acid, methacrylic acid, alkyl esters of methacrylic acid and mixtures thereof.

The amount of second non-vinyl ester monomer incorporated into the copolymer is preferably in the range of about 1% to about 50%, more preferably about 2% to about 50%: of the total number of moles of first vinyl ester monomer and second nonvinyl ester monomer incorporated into the copolymer.

The present copolymers may be prepared using any suitable polymerization process, for example, conventional vinyl polymerization processes, which are well known to those skilled to the art. For example, such copolymers may be prepared by means of free radical initiated processes utilizing bulk, suspension. Solution or emulsion polymerization techniques. solution polymerization or emulsion polymerization of the comonomers is particularly suited for producing the copolymers of the present invention.

solvent-based or solution polymerization reactions are often carried out in solvents in which all of the reaction components and the resultant reaction products are soluble. In some specific processes, e.g., involving heterogeneous catalysts, not all components of the system are fully dissolved. The solvents employed may perform one or more of the following: help reduce solution viscosities; help in controlling polymerization reaction exotherms; aid in component mixing; aid in controlling polymer molecular weights; and be of benefit in the end product.

Solvents are typically chosen with regard to reaction temperature and compatibility with other reaction/product components. A given solvent's temperature of reflux is usually considered the maximum reaction temperature for a nonpressurized solution polymerization containing it. Solution polymerization reactions may be carried out at temperatures above or below the solvent reflux temperature.

Reaction times are usually chosen such that a desired monomer conversion and/or solution viscosity is reached.

Other typical components employed in solution polymerization reactions may include polymerization

catalysts or initiators, chain terminators, antioxidants, light stabilizers, crosslinkers, other additives and the like. The reaction may benefit from the inclusion of one or more additional catalysts near the end of the polymerization procedure in order to insure adequate monomer conversions.

Without being limited to the same, any of the conventional solution polymerization techniques, such as batch, semi-batch, semi-continuous, and continuous methodologies, may be used.

Emulsion polymerization reactions are usually carried out in batch reactors equipped with stirrers and heating and cooling sources. Alternately, a loop reactor can be used. This is a long pipe reactor with reaction cooling advantages.

The emulsion polymerization reaction may employ one or more of each of surfactants, such as anionic, cationic, non-ionic, or amphoteric surfactants; initiators, such as radical initiators with co-initiators and/or accelerators, sometimes referred to as catalysts; pH buffers; protective colloids; stabilizers; chain terminators; other additives and the like.

Without being limited to the same, any of the conventional emulsion polymerization techniques, such as batch, semi-batch, semi-continuous, and continuous methodologies, may be used. Pre-emulsion monomer feed techniques may also be applied, if desired.

Once the present copolymers are produced they can be rendered water soluble by neutralizing at least a portion of the acid sites on the copolymers. Such neutralization can be accomplished in a conventional manner, such as through the use of a basic component, for example, aqueous ammonium hydroxide. The basic component should be chosen so as to have no substantial detrimental effect on the final product or on the application in which the water soluble copolymers are employed.

In a further aspect of the present invention, coating compositions, for example paint compositions, useful for coating a surface ore provided. Such compositions include a film-forming binder component. The present copolymers are useful for inclusion in such coating compositions, preferably in an amount effective to act as at least a portion of the film forming binder component.

The film-forming binder or latex component, that is one or more of the present copolymers, is preferably present in the final coating composition in an amount effective to form a resinous coating on at least a portion of the surface to which the coating composition is applied.

The amount of film-forming binder component in the present coating compositions may vary over a wide range and depends, for example, /n the specific copolymer or copolymers employed, the other components of the coating composition and the coating application for which the coating composition is to be employed. preferablyl the film-forming binder component comprises at least about 10%, more preferably at least about 20%, by weight of the coating composition. In one embodiment, the filmforming binder component is present in an amount in the range of about 10% to about 70%, preferably about 20% to about 60%, by weight of the coating composition.

The film-forming binder component is often introduced into the coating composition in the form of a solution or an emulsion. The solvent or other phase in the emulsion may be aqueous and/or may include other liquids, which are conventionally used in carriers for such film-forming binder components.

One or more liquid materials are often employed in the present coating compositions. Such liquid material or materials should be compatible with the other components of the coating composition and should be useful in the present compositions, preferably substantially without interfering with the properties of such compositions. such liquid materials often act as solvents, cosolvents, carriers or vehicles for one or more of the other components of the coating composition. Examples of liquid materials which may be employed are alkoxytriglycols, glycerol, ethylene glycol, propylene glycol, diethylene glycol, alkoxy polyalkylene glycols, polyalkylene glycols, in particular polyethylene glycols having a molecular weight in the range of about 200 to about 600, diethylene glycol monoethyl ether, propylene glycol monopropyl ether, water, mixtures thereof and the like. Liquid water is preferably present in the present coating compositions. The amount and type or types of liquid material or materials present in the coating compositions may vary widely and depends, for example, on the type of coating composition involved and the specific liquid material or materials being employed.

The present coating compositions often include a pigment component, i.e., one or more pigments. A pigment is and remains substantially insoluble when used in the present coating compositions and surface coatings. The presently useful pigments may be either organic or inorganic pigments. In one embodiment, the pigment component is selected from inorganic pigments, meaning to include therein carbon black and the like, and mixtures thereof. Examples of pigments which can be used and the color which such pigment imparts to the coating composition and surface coating, are as follows:

| | |
|---|---|
| White<br>Black<br>Blue<br>Green<br>Umber | Titanium dioxide<br>Lamp Black (Carbon Black)<br>Phthalo Blue<br>Phthalo Green<br>Raw Umber |
| Red | Toluidine Red<br>Red Iron Oxide<br>Quinacridone Red |
| Yellow | Diarylide Yellow<br>Yellow Iron Oxide |
| Orange<br>Violet | Dinitranaline Orange<br>Quinacridone Violet |

In many instances, the coating composition includes titanium dioxide as the primary pigment and one or more other coloring pigments.

The pigment component is preferably present in the present coating compositions as fine particlesl more preferably having a particle size of less than about 15 microns, sufficient to provide the uniformity of color desired in the coating composition and surface coating. Such pigments can be conventionally prepared, e.g., by milling, grinding and the like, to provide the desired particle size.

The amount of pigment component present in the coating compositions of the present invention is effective to provide the desired color to the coating composition. Preferably, the pigment component is present in an amount of at least about 1% by weight of the total coating composition, more preferably, at least about 5% by weight of the total composition. In certain instances, the pigment component can be present in any amount in the range of about 10% to about 40% or more by weight of the total coating composition.

The present coating compositions often advantageously include a dispersant component, e.g., at least one surface active agent or surfactant. Such dispersant component is preferably present in an amount effective to facilitate the dispersing of the pigment component, and possibly other components, in the coating composition. Suitable dispersant components can be categorized into the following groups: anionic, cationic, amphoteric and non-ionic. Because of their lower cost and higher efficiency in non-acidic systems, anionic dispersants are most commonly used for dispersing inorganic pigments. Such anionic materials are believed to act by imparting a negative charge to the pigment particles. The anionic dispersants reduce pigment re-aggregation and facilitate maintaining the dispersion through the mutually repelling nature of like charges on each pigment particle. Examples of such anionic dispersants include alkyl arylsulfonates sold by ICI Americas, Inc. under the trademark Atlas G-3300, and sodium salts of polymeric carboxylic acids sold by Rohm and Haas Company under the trademark Tamol®731.

Cationic dispersants are not normally used because most vehicles in which the pigments are placed are anionically dispersed. Combinations of anionic surfactants and cationic surfactants in the same system may cause pigment coagulation.

Amphoteric dispersants can generate cations in acid media and anions in basic media. Soya lecithin is an example of an amphoteric surfactant which may be used in the present compositions.

Non-ionic dispersants do not ionize in solution and are believed to function to move the wetted pigment particles into the body of the liquid vehicle by providing an "insulating" layer which achieves permanent separation of the particles. Such non-ionic dispersants are often referred to as stabilizers. An example of a non-ionic surfactant useful in the present composition is nonylphenol ethoxyolate sold by Union Carbide Chemicals and Plastics Company Inc. under the trademark Tergitol®. Combinations of different types of dispersants are frequently used to advantage. For example, the present compositions may include a mixture of anionic dispersants and non-ionic dispersants.

The amount of dispersant component included, if any, in the present coating compositions is such as to be effective to perform the desired function, e.g., as described herein. The specific amount of dispersant component used depends, for example, on the other components present in the compositions the specific dispersant or dispersants employed and the desired result to be achieved. preferably, the amount of dispersants included in the present compositions is at least about 0.1% by weight of the total coating composition. This percentage is based upon active dispersant, which is often available in diluted form.

Other components may be present in the present coating compositions. For example, one or more materials may be included which act to extend the pigment component. Such extender component is

preferably present in an amount effective to act as a pigment filler. That is, the extender component is present, preferably in the form of fine solid particles, in an amount such that a reduced amount of pigment component is needed to achieve the desired color properties in the present coating compositions. In other words, the extender component cooperates with the pigment component to provide the coating composition with the desired color. Such extender components may also act as flow control agents or as antisettling additives, or as leveling or flatting agents for the final surface coating.

Examples of useful extender components include alkali metal and alkaline earth metal silicates, aluminates, sulfates, carbonates and mixtures thereof, such as barium sulfate, calcium carbonate, calcium sulfate, calcium silicate, magnesium sulfate and the like.

The amount of extender component, if any, included in the present coating compositions is such as to be effective to perform the desired function, e.g., as described herein. The specific amount of extender component used depends, for example, on the other components present in the compositions the specific extender component employed and the desired result to be achieved.

In addition, the coating compositions of the present invention may include one or more additional components in an amount to provide desired beneficial properties to the compositions. such additional components may be chosen from components which are conventionally used to provide such beneficial properties to coating compositions. Among these additional components are: solvents, diluents, thinners, wetting agents, pH adjusters, antifoam (defoamer) agents, bactericides, fungicides, mildewcides, crosslinking catalysts, driers, filming aids, flash rust additives, mar aids, freeze-thaw additives, thickeners, flow additives, anti-crater agents, preservatives and the like. Such additional component or components are included in an amount effective to provide the desired property. Such amount may, for example, be substantially similar to the amount of such additional component or components conventionally employed in coating compositions. Of course, such additional component or components should be chosen to be compatible with the other components of the coating composition.

The present coating compositions can be prepared, for example, using conventional techniques for producing the type of coating composition involved. For example, a pigment grind component and a letdown component can be prepared separately and then blended together, with mixing, in the desired proportions to achieve the desired coating composition.

Once the present coating composition is prepared, it may be applied to a surface and dried/cured in a manner such as that conventionally employed for the particular type of coating composition and coating application involved.

The following non-limiting examples illustrate certain aspects of the present invention.

EXAMPLE 1

A sealable, 12 oz pressure bottle (Preiser Co.) was charged with 40 g vinyl acetate, 48 g vinyl pivalatel 12 g mono vinyl adipatel 2.3 g 2,2,-azobis-iso/butylronitrile (AIBN), 0.5 g mercaptoacetic acid, and 100 g propylene glycol monomethyl ether solvent, sold by Union Carbide Chemicals and plastics Company Inc. under the trademark Methyl PROPASOLO®. The bottle was capped (with a hand operated bottle capper)1 placed in a cotton bag for cushioning and safety, and lowered into a bottle reactor cage rack contained within a ?00C constant temperature water bath. The bottle reactor system was an end-over-end, mechanically tumbling, sealable, screen cage rack with individual bottle compartments. The constant temperature water bath was heated by steam and cooled by cold water piping within the bath. Venting of this system into a fume hood was also performed as a safety precaution.

The contents of the bottle were allowed to react for 4-5 hours with tumbling at the 70 °C bath temperature. The reactor heat source was then removed and the reaction mixture was allowed to cool overnight with tumbling. By morning, the reactor bottle was still at 50-55 °C. At this time, the bottle was removed from the rack. Upon cooling to room temperature, a sample was isolated from the bottle and was a clear, homogeneous, low viscosity solution, a terpolymer of vinyl acetate, vinyl pivalate and mono vinyl adipate having a number average molecular weight of about 5000 in the above-noted solvent.

One part by weight of the above prepared solution was neutralized with aqueous ammonium hydroxide and mixed in 9 parts water to determine solubility. After stirring for 5 minutes at ambient temperature the mixture was a clear solution with a bluish tint.

A sample was considered to be soluble if it formed a clear solution (often bluish) after 5 minutes of stirring at ambient temperature, about 22 °C. Materials designated as insoluble yielded large precipitates in the water solution even after such stirring. Samples designated as partially soluble produced highly-dispersed, small polymer particulates with little or no particle settling upon termination of such stirring. These partially soluble samples also showed characteristic cloudiness and opacity.

Isolating the polymer from its polymerization solvent prior to neutralization and treatment with water showed no effect on water solubility characteristics.

EXAMPLE 2 (Comparative)

A batch-wise, solution polymer having a number average molecular weight of about 5000 was prepared by combining 30 g vinyl acetate, 50 g vinyl pivalate, 20 g acrylic acid, 2.3 g AIBN, 0.5 g mercaptoacetic acid, and 100 g propylene glycol monomethyl ether solvent and using an identical polymerization procedure to that described in Example 1.

Neutralization of this sample and treatment with water in a manner similar to that described in Example 1 yielded a sample which totally agglomerated and was not soluble in the otherwise clear, water phase.

EXAMPLE 3

A batch-wise, solution polymer having a number average molecular weight of about 5000 was prepared by combining 40 g vinyl acetate, 48 g vinyl pivalatel 12 g 4-penteonic acid, 2.3 g AIBN, 0.5 g mercaptoacetic acid, and 100 g propylene glycol monomethyl ether solvent and using an identical polymerization procedure to that described in Example 1.

Neutralization of this sample and treatment with water in a manner similar to that described in Example 1 yielded a sample which readily dissolved to form a nice clear aqueous solution.

EXAMPLE 4 (Comparative)

A batch-wise, solution polymer having a number average molecular weight of about 5000 was prepared by combining 34 g vinyl acetate, 48 g vinyl pivalatel 18 g Crotonic acid, 2.3 g AIBN, 0.5 g mercaptoacetic acid, and 100 g propylene glycol monomethyl ether solvent and using an identical polymerization procedure to that described in Example 1.

Neutralization of this sample and treatment with water in a manner similar to that described in Example 1 yielded a sample which formed a cloudy, polymer dispersion of small particles in the aqueous medium.

EXAMPLE 5

A series of solution type polymers having number average molecular weights in the range of about 3000 to 5000 were prepared and tested in a manner similar to that described in Example 1. Each of these polymers included vinyl acetate and vinyl pivalate in a weight ratio of about 60:40. Variable amounts of one or more vinyl functional carboxylic acid-containing monomers were also used in the polymerization reaction mixture. The results of these tests were used to determine the minimum amount of the vinyl functional carboxylic acid-containing monomers needed to render the neutralized solution polymer water soluble. Such minimum solubility concentrations were determined to be as follows:

| Vinyl Functional, Carboxylic Acid Monomer | Minimum Amount of Acid Comonomer* | |
|---|---|---|
| | Weight% | Mole% |
| Mono Vinyl Adipate | 12 | 7.7 |
| 4-Pentenoic Acid | 12 | 12.5 |
| Acrylic Acid(1) | 10 | 13.8 |
| Crotonic Acids | 3-4 | 4.6 |
| Methacrylic Acid(1) | 12 | 14.5 |
| Crotonic Acid | 5 | 6.0 |
| Crotonic Acid(2) | (18) | (21.4) |
| Maleic Acid | >25 | >22.4 |
| Vinyl Acetic Acid | 20 | 23.7 |
| Acrylic Acid | >20 | >27.3 |

(1) The copolymer was derived from this mixture of acid monomers.
(2) The amounts listed are the minimum required to achieve translucency of the copolymer containing crotonic acid as the sole acid monomer.

These results indicate that vinyl functional carboxylic acid monomers in which the vinyl group is separated by at least two atoms from the carboxylic acid group provide water soluble neutralized copolymers with reduced levels of such monomers. Thus, 4-pentenoic acid and particularly mono vinyl adipate produce water soluble copolymers with reduced concentrations of such acid monomers relative to the acid monomers in which the vinyl group and carboxylic acid groups are separated by no atoms or only one atom. Water solubility of such neutralized copolymers is often necessary for effective use in coating and ink applications. Also, the acid monomer represents a significant cost in the manufacture of such copolymers. Therefore, using copolymers which are water soluble and are produced using reduced amounts of the acid monomer are advantageous, in terms of copolymer cost, and may promote the increased applicability of such copolymers.

While this invention has been described with respect to various specific examples and embodiments, it is to be understood that the invention is not limited thereto and that it can be variously practiced within the scope of the following claims.

## Claims

1. A polymeric composition comprising a copolymer comprising units derived from at least one vinyl ester monomer and at least one vinyl functional acid-containing monomer in which the vinyl group is separated by at least two atoms from the acid group, said copolymer having a number average molecular weight of less than 10,000 and being substantially water soluble in the neutralized state.

2. The composition of claim 1 wherein said copolymer further comprises units derived from at least one additional monomer having a functional carbon-carbon double bond or wherein said copolymer comprises units derived from at least two different vinyl ester monomers.

3. A composition comprising a terpolymer comprising units derived from vinyl acetate, vinyl pivalate and mono vinyl adipate, said terpolymer being substantially water soluble in the neutralized state.

4. The composition of claim 3 wherein the number of moles of mono vinyl adipate included in said terpolymer is equal to less than about 10% of the total number of moles of monomer included in said terpolymer.

5. A composition comprising a copolymer comprising units derived from at least one first vinyl ester monomer, at least one second non-vinyl ester monomer having a functional carbon-carbon double bond and at least one third vinyl functional acid-containing monomer in which the vinyl group is separated by at least two atoms from the acid group, said copolymer being substantially water soluble in the neutralized state.

6. The composition of claim 5 wherein said at least one first vinyl ester monomer is vinyl acetate, wherein said at least one second non-vinyl ester monomer is selected from ethylene, vinyl chloride and styrenes, and wherein said at least one third vinyl functional acid-containing monomer includes an acid group selected from carboxylic acid groups, sulfonic acid groups and phosphoric acid groups.

7. A composition comprising a copolymer comprising units derived from at least one first vinyl ester monomer, at least one second monomer having a functional carbon-carbon double bond and at least one third vinyl functional acid-containing monomer in which the vinyl group is separated by at least two atoms from the acid group, said copolymer having a number average molecular weight of less than 10,000 and being substantially water soluble in the neutralized state.

8. The composition of claim 7 wherein said at least one first vinyl ester monomer is vinyl acetate, wherein said at least one second monomer is selected from acrylic acid, alkyl esters of acrylic acid, methacrylic acid and alkyl esters of methacrylic acid, and wherein said at least one third vinyl functional acid-containing monomer includes an acid group selected from carboxylic acid groups, sulfonic acid groups and phosphoric acid groups.

9. In a composition useful for coating a surface which includes a film-forming binder component, the improvement which comprises a copolymer comprising units derived from at least one vinyl ester component and at least one vinyl functional acid-containing monomer in which the vinyl group is

separated by at least two atoms from the acid group, said copolymer being substantially water soluble in the neutralized state and being present in an amount effective to act as at least a portion of said film-forming binder component.

**10.** The composition of claim 9 wherein said copolymer further comprises units derived from at least one additional monomer having a functional carbon-carbon double bond.

**11.** The composition of claims 1 or 9 wherein said at least one vinyl ester monomer is vinyl acetate and wherein said at least one vinyl functional acid-containing monomer includes an acid group selected from carboxylic acid groups, sulfonic acid groups and phosphoric acid groups.

**12.** The composition of claims 3, 5 and 9 wherein said terpolymer or copolymer has a number average molecular weight of at least about 1500.

**13.** The composition of claims 1 or 9 wherein the number of moles of said at least one vinyl functional acid-containing monomer included in said copolymer is equal to less than about 15% of the total number of moles of monomers included in said copolymer.

**14.** The composition of claims 1 or 9 wherein said at least one vinyl functional ester monomer is vinyl acetate and said at least one vinyl functional acid-containing monomer is mono vinyl adipate.